# EUROPÄISCHE PATENTSCHRIFT

(11) **EP 1 568 543 B1**
(45) Veröffentlichungstag und Bekanntmachung des Hinweises auf die Patenterteilung: **15.11.2006**
(21) Anmeldenummer: 05101108.8
(22) Anmeldetag: 15.02.2005
(51) Int. Cl.: B60R 13/08, B60K 20/04, F16H 59/02

(54) **Abdeckung, insbesondere für einen Ganghebel**
Cover, in particular for a gear shift lever
Couvercle, en particulier pour un levier sélecteur

(30) Priorität: 27.02.2004 DE 102004009660
(43) Veröffentlichungstag der Anmeldung: 31.08.2005
(73) Patentinhaber: Ford Global Technologies, LLC., Dearborn MI 48126 (US)
(72) Erfinder: Caton, John, CM3 7BF, South Woodham Ferrers (GB); Bürger, Stefan, 40723 Hilden (DE)
(74) Vertreter: Drömer, Hans-Carsten

(56) Entgegenhaltungen:
- DE-A1- 19 745 875
- DE-A1- 19 957 226
- US-A1- 2002 040 615

## Beschreibung

Die Erfindung betrifft eine Abdeckung für die Öffnung einer Verkleidung eines Schaltaggregates gemäß dem Oberbegriff des Anspruchs 1, siehe EP-A-0 836 038.

Bei der Herstellung und dem Zusammenbau von Kraftfahrzeugen entstehen Abweichungen bezüglich der relativen Lage von einzelnen Teilen des Fahrzeugs zueinander, die durch Maßtoleranzen der Bauteile und Lageabweichungen bei ihrem Einbau hervorgerufen werden. Dies trifft insbesondere auf Abweichungen zwischen an der Karosserie und an der Innenverkleidung des Fahrzeugs befestigten Bauteilen, wie Wählhebeln zur Betätigung von Schaltaggregaten zu, die durch Öffnungen in der Verkleidung in den Fahrgastraum ragen.

Bestehen Abweichungen zwischen sichtbaren Teilen, müssen diese u. a. aus optischen Gründen versteckt bzw. überdeckt werden. Die Wählhebel werden daher mit Abdeckungen versehen, um vorhandene Toleranzen bzw. Lageabweichungen zwischen der Öffnung der Verkleidung des Schaltaggregats und dem Schaltaggregat selbst auszugleichen.

Solche Wählhebel dienen zur Bedienung von Klimaanlagen, Heizungen, Regelung der Luftzufuhr und -strömung und insbesondere für die Schaltung des Getriebes.

So wird z. B. der Wählhebel des Getriebes in einem Kulissenbauteil geführt, dessen Führungsbahn synchron zu derjenigen der Führung des Wählhebels in dem Schaltaggregat ausgerichtet ist. Da das Schaltaggregat und dessen Verkleidung, die beispielsweise die Mittelkonsole eines Fahrzeuges ist, getrennt gelagert sind, treten beim Zusammenbau zwischen ihnen Lageabweichungen bzw. Toleranzen auf, die ausgeglichen werden müssen. Dies geschieht mit Hilfe einer Abdeckung.

Dazu ist es z. B. bekannt am Wählhebel (Schaltknauf) für das Getriebe gamaschenartige Abdeckungen aus einem elastischen Material wie Leder einzusetzen. Allerdings sind solche "Beutel" häufig aus optischen und baulichen Gründen unerwünscht, wie z. B. bei Automatikgetriebewählhebeln. Dann kommen feste Ausgleichsplatten bzw. Abdeckungen zum Einsatz.

Bei einer aus der EP 0 698 755 A2 bekannten solchen Abdeck-Platte können lediglich in horizontaler Richtung Toleranzen gegenüber der Verkleidung ausgeglichen werden.

Jedoch ist es zusätzlich notwendig, Toleranzen bzw. Lageabweichungen in lotrechter Richtung bzw. in Richtung der Fahrzeughochachse auszugleichen.

Aus der gattungsbildenden EP 0 836 038 B1 ist eine Abdeck-Platte bekannt, die einen solchen Ausgleich zwar erlaubt, jedoch können erfolgt der Ausgleich durch eine Veränderung des Anstellwinkels der Abdeck-Platte an der Verkleidung. Die Abdeck-Platte weist hierzu sichtbare Bereiche aus unterschiedlich elastischen Materialien auf, um die Anlage der Abdeck-Platte an der Verkleidung beim Ausgleich von Toleranzen in Richtung der Fahrzeughochachse sicherzustellen. Dies bedingt eine aufwendige Herstellung und schränkt die optische Gestaltung des Bauteils ein bzw. bewirkt eine Änderung der Optik je nach Anstellwinkel. Zudem erfolgt die Befestigung der Abdeck-Platte und folglich auch der Ausgleich der Toleranzen durch eine höhenvariable Befestigung an dem Schaltaggregat, so dass die Kulisse für den Wählhebel je nach Befestigung und Ausgleich unterschiedliche Positionen in Richtung der Fahrzeughochachse bezüglich des Wählhebels einnimmt.

Aufgabe der Erfindung ist es, eine Abdeckung für die Öffnung einer Verkleidung eines Schaltaggregates, mit einem Kulissenbauteil zur Aufnahme eines in diesem zu bewegenden, an dem Schaltaggregat gelagerten Wählhebels bereitzustellen, die einen Ausgleich von Toleranzen bzw. Lageabweichungen, insbesondere in Richtung der Fahrzeughochachse ermöglicht, ohne dass die Position des Kulissenbauteils bei der Befestigung variiert oder sich je nach ausgeglichener Toleranz verändert. Ferner muss die Montage bzw. Demontage ohne Schwierigkeiten beispielsweise zur Wartung und Reparatur erfolgen können und ein geringer Platzbedarf für die Abdeckung nötig sein. Darüber hinaus soll die zu schaffende Ausführung rationell und kostengünstig herstellbar sowie optisch unabhängig von dem Toleranzausgleich und der Befestigung ansprechend und variable gestaltbar sein.

Diese Aufgabe wird durch die in Anspruch 1 wiedergegebene Abdeckung gelöst.

Dadurch, dass das Ausgleichselement ein oberes Teil und ein unteres Teil umfasst, die einander überlappen und gegeneinander verlagerbar sind, wobei das untere Teil unter einer Kraft an der Verkleidung anliegt, d. h. "angedrückt" wird, ist es möglich, einen Ausgleich von Toleranzen insbesondere in Richtung der Fahrzeughochachse zu erlauben, ohne dass die Position des Kulissenbauteils sich je nach ausgeglichener Toleranz verändert. Dabei findet trotzdem die sichere und variable Anlage der Abdeckung an der Verkleidung unabhängig von der ausgeglichenen Toleranz statt.

Das Schaltaggregat dient als Fixpunkt für die Lage der Abdeckung, insbesondere des oberen Teils des Ausgleichselements. Die Abdeckung ist also ortsfest, jedoch lösbar mit dem Schaltaggregat verbunden, so dass eine in diesem vorhandene Schaltkulisse für den Wählhebel synchron zu dem Kulissenbauteil in der Abdeckung ausgerichtet ist und beim Ausgleich von Toleranzen seine Position sich trotz ausgeglichener Toleranz nicht verändert. Eine höhenvariable Befestigung, wie dies nach der EP 0 836 038 B1 zur sicheren Anlage notwendig ist, entfällt. Die Anlage an der Verkleidung wird vielmehr durch die auf das untere Teil einwirkende Kraft sichergestellt.

Die Kraft wirkt vorzugsweise in Richtung der Verkleidung, wobei es von Vorteil ist, wenn sie dabei zwischen dem oberem und unteren Teil wirkt. Somit kann nicht nur ein Ausgleich von Toleranzen in Richtung der Fahrzeughochachse, sondern auch je nach Einbaulage auch in andere Richtungen vorgenommen werden, wie dies z. B. bei Reglern für die Luftströmung der Fall ist.

Der eigentliche Ausgleich der Toleranzen erfolgt in dem Ausgleichselement durch eine Verschiebung des oberen und unteren Teils gegeneinander, wodurch bevorzugt zumindest der Bereich der Öffnung zwischen Verkleidung und Kulissenbauteil abdeckt wird.

Hierzu weisen diese vorzugsweise je einen der Richtung der Kraft etwa parallel ausgerichteten, also üblicherweise in Richtung der Fahrzeughochachse nach unten bzw. nach oben gerichteten umlaufenden Steg auf. Günstigerweise sind diese derart ausgebildet, dass sie einander zur Abdeckung der Öffnung zwischen Verkleidung und Kulissenbauteil überlappen und mit Ihren umlaufenden Außen- bzw. Innenflächen an einander anliegen. Die Erstreckung der Stege sollte dabei so gewählt sein, daß auch bei Ausgleich der maximal vorkommenden Toleranz, deren Überlappung sichergestellt ist.

Lageabweichungen zwischen der Öffnung der Verkleidung des Schaltaggregates und der durch das Schaltaggregat vorgegebenen Lage der Abdeckung können also durch die erfindungsgemäße Ausführung einfach, unauffällig und in relativ großem Ausmaß ausgeglichen werden. Ferner kann das Ausgleichselement der erfindungsgemäßen Abdeckung durch seine Zweiteilung rationell und kostengünstig hergestellt sowie optisch ansprechend und variable gestaltet werden. Es können unterschiedliche Materialen und Oberflächen verwendet werden, so dass die Anpassung an verschiedene Umgebungen bzw. Kraftfahrzeugmodelle und Ausstattungen ggf. auch modular möglich ist.

Ferner ist die Bewegung des Wählhebels durch die erfindungsgemäße Abdeckung uneingeschränkt möglich. Es ist kein zusätzlicher Platzbedarf unterhalb der Verkleidung für die Befestigung der Abdeckung nötig. Auch kann die Montage bzw. Demontage ohne Schwierigkeiten beispielsweise zur Wartung und Reparatur erfolgen.

Das obere Teil besitzt vorzugsweise eine rosettenförmige Gestalt. Das untere Teil ist vorzugsweise kragenförmig ausgebildet.

Das obere Teil kann erfindungsgemäß ein von dem Kulissenbauteil separates Bauteil sein, das mittels geeigneter Maßnahmen mit diesem fest verbindbar und vorzugsweise lösbar ist. Alternativ ist es möglich das obere Teil des Ausgleichselements mit dem Kulissenbauteil als einstückiges Bauteil auszuführen.

Zur Erzeugung der in Richtung der Verkleidung gerichteten Kraft ist in einer bevorzugten Ausführungsform ein Krafterzeugungselement vorgesehen. Dieses kann als integraler Teil des Ausgleichselements - als Teil des oberen Teils, des unteren Teils oder als Bestandteil beider Teile - oder als ein von dem Ausgleichselement separates Bauteil ausgeführt sein.

Das Krafterzeugungselement umfasst bevorzugterweise ein elastisches Bauteil, welches der eigentlichen Krafterzeugung dient. Hierzu wird das elastische Bauteil bei der Montage bzw. beim Zusammenbau gestaucht und "drückt" durch sein Bestreben seine ursprüngliche Gestalt einzunehmen auf das obere und untere Teil der Abdeckung. Da das obere Teil des Ausgleichselements ortsfest gelagert ist, wirkt die Kraft in Richtung der Verkleidung auf das untere Teil, welches daher auf der Verkleidung zur Abdeckung der Öffnung und somit Ausgleich der Toleranzen anliegt. Das obere Teil drückt quasi mit einer in Richtung der Verkleidung gerichteten Kraft nach unten auf das untere Teil. Die Kraft wirkt also vorzugsweise zwischen dem oberen und unteren Teil.

Das elastische Bauteil kann erfindungsgemäß mindestens ein Federelement, einen komprimierbaren elastischen Schaum, mindestens einen elastisch deformierbaren Steg oder mindestens einen elastisch deformierbaren Doppel-Steg umfassen.

Als Material bzw. Werkstoff kommen je nach Ausführung sowohl Kunststoffe, wie kautschukartige Polymere oder auch Metalle in Frage.

Umfasst das Krafterzeugungselement mindestens einen elastisch deformierbaren Steg oder mindestens einen elastisch deformierbaren Doppel-Steg, so weist es in einer bevorzugten Ausführungsform mindestens eine Rippe zum Zusammenwirken mit dem mindestens einen elastische deformierbaren Steg oder Doppel-Steg auf. Die vorzugsweise an dem oberen Teil des Ausgleichselements angeordnete Rippe kann hierzu einen im Querschnitt besehen nach unten geneigte Rampenform aufweisen, so dass sie nach Zusammenbau der Abdeckung auf den elastischen Steg, der vorzugsweise am unteren Teil des Ausgleichselements angeordnet ist, einwirkt bzw. ihn "staucht", um diesen etwa horizontal abzulenken bzw. zu verformen.

Durch sein Bestreben seine ursprüngliche Gestalt, also wieder in die etwa parallel zur Richtung der Kraft gerichtete Ausrichtung zurückzukehren, drückt der Steg auf die rampenförmige Rippe des ortsfest gelagerten oberen Teils und bewirkt so die in Richtung der Verkleidung gerichtete Kraft.

Der mindestens eine elastisch deformierbare Doppel-Steg kann einen A-förmigen Querschnitt aufweisen und entweder integraler Bestandteil des unteren Teils des Ausgleichselements oder ein separates Bauteil sein. Ist der Steg Bestandteil des unteren Teils des Ausgleichselements, so können, um zu verhindern, dass die Deformation des Doppel-Stegs eine Verformung oder einen Verzug des unteren Teils bewirkt, verschiedene konstruktive Maßnahmen vorgesehen werden, wie sie sich aus der nachfolgenden Beschreibung der Figuren ergeben. Ist er dagegen ein separates Bauteil, kann er aus einem geeigneten Material, wie einem Kunststoff auch Metall hergestellt und entsprechend mit dem unteren Teil befestigt sein.

Mit der erfindungsgemäßen Ausgestaltung des Ausgleichselementes kann die Abdeckung nicht nur die bereits beschriebenen vertikalen Toleranzen in Richtung der Fahrzeughochachse, sondern auch in horizontale Toleranzen in Fahrzeuglängs- und Fahrzeugquerachse ausgleichen. Dazu muß die Gesamtlänge bzw. -breite des unteren Teils des Ausgleichselementes entsprechend länger bzw. breiter als die abzudeckende Öffnung sein. Durch die zweigeteilte Ausführung des Ausgleichselementes in oberes und unteres Teil kann dabei insbesondere die Anpassung an verschiedene Öffnungen, z. B. bei verschiedenen Fahrzeugtypen oder -varianten, sehr einfach erfolgen, da jeweils nur das untere Teil entsprechend an die Öffnung angepaßt werden muß, während das obere Teil im wesentlichen unverändert verwendet werden kann.

In einer weiteren vorteilhaften Ausführung sind das obere Teil und das untere Teil über das elastische Bauteil untrennbar, aber elastisch gekoppelt miteinander verbunden. Eine solche Baueinheit der Abdeckung kann entweder aus Einzelteilen vormontiert und/oder ganz oder teilweise in einem Stück gefertigt werden. Indem alle Teile der Abdeckung untrennbar miteinander verbunden sind, ist die Handhabung der Abdeckung bei der Montage auf das Schaltaggregat vereinfacht, da all zugehörigen Teile der Abdeckung in der richtigen Position zueinander ausgerichtet sind und so die Abdeckung mit wenig Aufwand auf dem Schaltaggregat montiert werden kann.

Vorteilhaft ist dabei das elastisches Bauteil als Biegefederelement ausgeführt. Dann kann des elastische Bauteil aus dem gleichen Material wie das obere und/oder untere Teil bestehen, die elastischen Eigenschaften werden durch die Formgebung als Biegefeder erzielt.

Weiterhin kann es vorteilhaft sein, wenn oberes Teil, unteres Teil und elastisches Bauteil einstückig ausgeführt sind. Dann kann die gesamte Abdeckung in einem Fertigungsschritt, z. B. als Spritzgußteil, geformt werden; eine Vormontage der Abdeckung entfällt.

Weiterhin vorteilhaft ist es, wenn zumindest zwei der Teile oberes Teil, unteres Teil und elastisches Bauteil miteinander gefügt sind. Die Vormontage der Abdeckung aus den einzelnen Teilen kann so erfolgen, daß die einzelnen Teile alle fest miteinander verbunden sind, indem die Teile miteinander gefügt werden. Dies kann z. B. eine Verklebung zwischen elastischem Teil und sowohl unterem als auch oberem Teil sein, wenn z.B. das elastische Teil ein elastischer Schaumwerkstoff ist. Oder, wenn das elastische Teil eine Biegefeder ist, kann diese mit oberen und/oder unterem Teil vernietet, verclipst, verschraubt oder verschweißt sein. Dabei ist unerheblich, ob bereits zwei der Teile oberes Teil, unteres Teil und elastisches Bauteil einstückig ausgeführt sind. Damit kann die Herstellung der Abdeckung selbst sehr flexibel erfolgen, je nach Anforderungen an die Abmessungen der Teile und den Aufwand für die Vormontage der Abdeckung.

Weitere Merkmale, Einzelheiten und Vorteile der Erfindung ergeben sich aus der nachfolgenden Beschreibung. Es zeigen:
- Fig. 1: schematisch einen Querschnitt durch eine erfindungsgemäße Abdeckung mit einem Wählhebel einer Getriebeschaltung im Bereich der Mittelkonsole eines Kraftfahrzeugs;
- Fig. 2: schematisch einen vergrößerten Ausschnitt der erfindungsgemäßen Abdeckung aus Fig. 1 mit einer ersten Ausführungsform des Krafterzeugungselements des Ausgleichselements;
- Fig. 3: schematisch einen vergrößerten Ausschnitt der erfindungsgemäßen Abdeckung aus Fig. 1 mit einer weiteren Ausführungsform des Krafterzeugungselements des Ausgleichselements;
- Fig. 4: schematisch einen vergrößerten Ausschnitt der erfindungsgemäßen Abdeckung aus Fig. 1 mit einer weiteren Ausführungsform des Krafterzeugungselements des Ausgleichselements;
- Fig. 5: eine perspektivische Ansicht einer Ausführungsform des unteren Teils eines Ausgleichselements;
- Fig. 6: eine vergrößerte Ansicht einer Variante der Ausführungsform aus Fig. 5;
- Fig. 7: schematische eine weitere Variante der Ausführungsform aus Fig. 5 und
- Fig. 8: schematische eine weitere Variante der Ausführungsform aus Fig. 5.

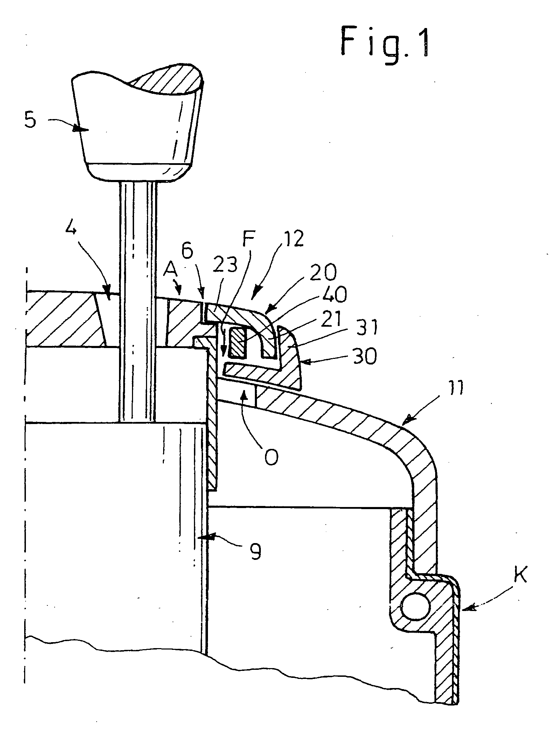

Fig. 1 zeigt schematisch einen Querschnitt durch eine erfindungsgemäße Abdekkung A mit einem Wählhebel 5 einer Getriebeschaltung im Bereich der Mittelkonsole K eines Kraftfahrzeugs für die Öffnung O einer Verkleidung 11 eines Schaltaggregates 9, mit einem Kulissenbauteil 4 zur Aufnahme des in diesem zu bewegenden, an dem Schaltaggregat 9 gelagerten Wählhebels 5. Die Abdeckung A ist mit dem Schaltaggregat 9 verbunden und weist ein Ausgleichselement 12 zum Anpassen der Abdeckung A an Abweichungen bezüglich der relativen Lage zwischen Schaltaggregat 9 und Verkleidung 11 auf.

Von der Mittelkonsole K des Kraftfahrzeugs erstreckt sich die das Schaltaggregat 9 umgebende Verkleidung 11. Das Schaltaggregat 9 ist eine Automatikgetriebeschaltung, die mit dem Wählhebel 5 bedient wird, der in einer Kulisse des Kulissenbauteils 4 der Abdeckung A geführt wird, das mit dem Schaltaggregat 9 ortsfest, aber lösbar verbunden ist. D. h. seine Position in Richtung der Fahrzeughochachse ist bezüglich des Wählhebels 5 festgelegt. Die Befestigung des Kulissenbauteils 4 mit dem Schaltaggregat 9 kann auf beliebige, dem Fachmann bekannte Weisen erfolgen. In Betracht kommen u. a. Schraub-, Klemm-, Rast- und Klebeverbindungen.

Das Schaltaggregat 9 ist an dem nicht dargestellten Boden des Fahrzeugs und die Verkleidung 11 an der Mittelkonsole K festgelegt. Da Maß-, Fertigungs- oder Montagetoleranzen bzw. -abweichungen zwischen diesen Bauteilen vorkommen, gibt es zwischen dem Schaltaggregat 9 und der Verkleidung 11 einen Öffnung O, die diese Toleranzen ausgleicht. Die Toleranzen treten in allen drei Raumrichtungen auf, also sowohl in der Horizontalen als auch in der Vertikalen. Zwischen dem Schaltaggregat 9 bzw. dem Kulissenbauteil 4 und der Verkleidung 11 liegt also die Öffnung O, die sich aus Maß- und/oder Fertigungs- und/oder Montagetoleranzen der verschiedenen Bauteile ergibt.

Das Ausgleichselement 12 der erfindungsgemäßen Abdeckung A dient zur Überdeckung der Öffnung O in allen drei Raumrichtungen, insbesondere in Richtung der Hochachse des Kraftfahrzeugs.

Dazu weist das Ausgleichselement 12 ein oberes, rosettenartiges Teil 20 und eine unteres, kragenförmiges Teil 30 auf, die das Schaltaggregat 9 bzw. Kulissenbauteil 4 umgeben und dabei die Öffnung O abdecken.

Das obere, rosettenartige Teil 20 sitzt auf einem umlaufenden Absatz 6 des Kulissenbauteils 4 auf und ist mit diesem ortsfest verbunden, so dass sich ein etwa gleichförmiger, optisch ansprechender Oberflächenverlauf ergibt. Die Neigung der Oberfläche ist im Querschnitt besehen also im horizontaleren Bereich 23 der Teils 20 der Neigung des Kulissenbauteils 4 angepasst. Anschließend nimmt sie dann immer mehr zu, bis im Querschnitt gesehen eine etwa viertelkreisförmige Form mit einem nach unten gerichteten, umlaufenden Steg 21 entsteht.

Die Position des oberen Teils 20 ist unabhängig von der auszugleichenden Toleranz gegenüber dem Kulissenbauteil 4 bzw. dem Schaltaggregat 9 festgelegt. Seine Höhe über dem Schaltaggregat 9 ändert sich also nicht.

Das obere, rosettenartige Teil 20 kann sowohl fest als auch lösbar mit dem Kulissenbauteil 4 verbunden sein. Hierzu können die dem Fachmann bekannten Verfahren angewendet werden, wie z. B. Schrauben, Klemmen, Quetschen, Kleben, Rasten usw., wobei lösbare Verfahren bevorzugt sind, so dass eine Demontage zu Reparatur- und Wartungszwecken einfach möglich ist.

Das untere, kragenförmige Teil 30 liegt locker an der Oberfläche der Verkleidung 11 an und weist im Querschnitt besehen die Form eines auf der Seite liegenden "L" auf, weist also einen nach oben gerichteten umlaufenden Steg 31 und einen etwa horizontalen, auf der Verkleidung 11 anliegenden Bereich 33 auf, der über bzw. in die Öffnung O ragt.

Die Teile 20 und 30 bzw. deren Stege 21 und 31 sind derart ausgebildet, dass sie einander zur Abdeckung der Öffnung O zwischen Verkleidung 11 und Schaltaggregat 9 bzw. Kulissenbauteil 4 überlappen und mit ihren umlaufenden Außen- 22 bzw. Innenflächen 32 an einander anliegen. Die Erstreckung der Teile bzw. der Stege ist so gewählt, daß auch bei Ausgleich der maximal vorkommenden Toleranz bzw. Öffnung O, deren Überlappung sichergestellt ist.

Damit das untere Teil 30 sicher auf der Verkleidung 11 aufliegt bzw. angedrückt wird, wirkt eine in Richtung der Verkleidung, üblicherweise in Richtung der Fahrzeughochachse, gerichtete Kraft F auf das untere Teil 30 ein.

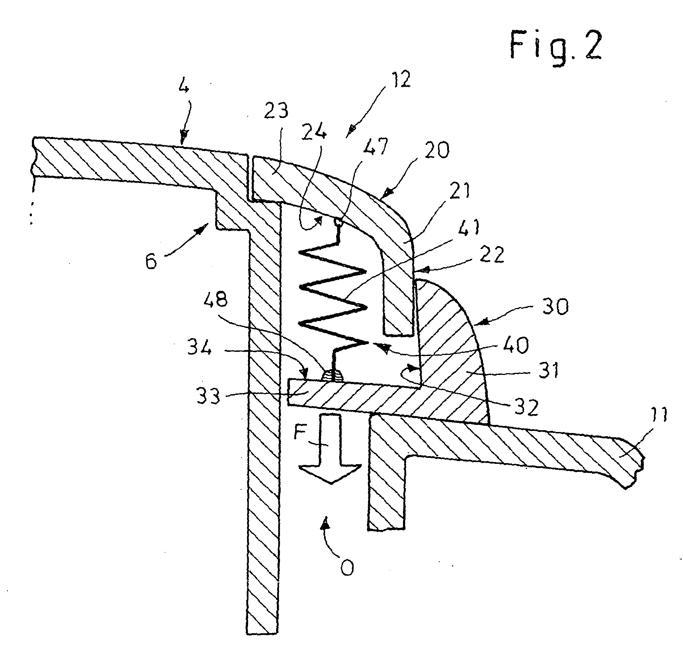

Die Kraft F wird durch ein Krafterzeugungselement 40 erzeugt, welches in Fig. 1 nur schematisch angedeutet ist und sich aus den nachfolgenden Figuren 2 bis 8 ergibt. Das oder die Bauteile des Krafterzeugungselements 40 werden nachfolgend im Singular verwendet. Es versteht sich jedoch, dass mehrere Krafterzeugungselemente oder deren Bauteile im Rahmen der Erfindung vorgesehen werden können.

Figur 2 zeigt schematisch einen Ausschnitt der erfindungsgemäßen Abdeckung A aus Fig. 1 im Bereich der Öffnung O mit einer ersten Ausführungsform des Krafterzeugungselements 40 des Ausgleichselements 12. Dieses besteht in der dargestellten Variante aus einem Federelement 41, das an der inneren Unterseite 24 des oberen Teils 20 und an der inneren Oberseite 34 des etwa horizontalen Bereichs 33 des unteren Teils 30 über Befestigungspunkte 47 und 48 befestigt ist.

Es versteht sich, dass sich die gewählten Bezeichnungen "oben" und "unten" usw. auf die Figuren beziehen und Richtungen parallel zur Ausrichtung der Kraft F bezeichnen.

Das Federelement 41 besteht aus einem geeigneten Metall oder Kunststoff und wird beim Zusammenbau der Abdeckung 12 gestaucht. Die Kraft F drückt in Richtung der Fahrzeughochachse nach unten auf das untere, locker gelagerte Teil 30 im Bereich des Ausgleichselements 12, da das obere Teil 20 festgelegt ist. Die Befestigung an den Punkten 47 und 48 erfolgt mittels Klebstoff, kann aber auch über andere Befestigungsverfahren, wie Klemmen, Schrauben usw. vorgenommen werden. Auch kann das Federelement 41 integraler Bestandteil entweder von Teil 30 oder Teil 20 sein.

Da das Krafterzeugungselement 40 sich vollständig im Inneren des Ausgleichselements 12 bzw. dessen Teile 20 und 30 befindet, ist es von Außen, also von der Fahrgastzelle aus verborgen. Dies ermöglicht eine breite Variation der Konstruktionsmöglichkeiten des Krafterzeugungselements 40 und der Abdeckung ohne gegenseitige Beeinflussung und somit einen großen Spielraum bei der optischen und konstruktiven Gestaltung zur Anpassung an das Innere des Fahrgastraumes des Fahrzeugs.

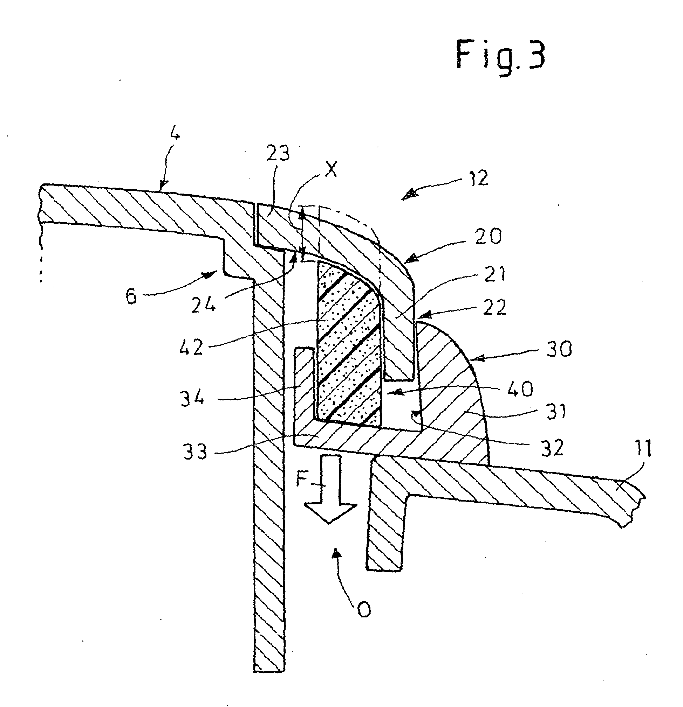

Figur 3 zeigt schematisch einen Ausschnitt der erfindungsgemäßen Abdeckung A aus Fig. 1 im Bereich der Öffnung O mit einer alternativen Ausführungsform des Krafterzeugungselements 40 des Ausgleichselements 12. Die Abdeckung bzw. das Ausgleichselement entsprechen im wesentlichen der vorhergehend beschriebenen Ausführungsformen, so dass nachfolgend lediglich auf Unterschiede eingegangen wird.

Das Krafterzeugungselement 40 besteht in der dargestellten, weiteren Variante aus einem elastisch komprimierbaren Schaumstoff 42, der an der inneren Unterseite 24 des oberen Teils 20 und an der inneren Oberseite 34 des etwa horizontalen Bereichs 33 des unteren Teils 30 anliegt. Hierbei kann es sich um einzelne Schaumstoffblöcke oder einen umlaufenden Strang handeln, die/das in das Ausgleichselement 12 eingesetzt werden/wird.

Der Schaumstoff 42 wird beim Zusammenbau der Abdeckung bzw. des Ausgleichselements um das durch den Doppelpfeil angedeutete Ausmaß X gestaucht, so dass die durch sein Bestreben seine Ausgangsgestalt anzunehmen, erzeugte Kraft F in Richtung der Verkleidung auf das untere Teil 30 des Ausgleichselements 12 wirkt, da das obere Teil 20 festgelegt ist.

Um ein Verrutschen des Schaumstoffs 42 zu verhindern, kann dieser an seinen jeweiligen Anlageflächen an dem Ausgleichselement 12 mit Haftkleber versehen sein. Eine weitere Möglichkeit, die in der Ausführungsform verwirklicht ist, besteht in der Verwendung eines zweiten, weiter innen vorgesehenen, nach oben gerichteten Stegs 34 an dem unteren Teil 30, der den Schaumstoff 42 zwischen sich und dem von oben nach unten ragenden Steg 21 des ersten, oberen Teils 20 einklemmt.

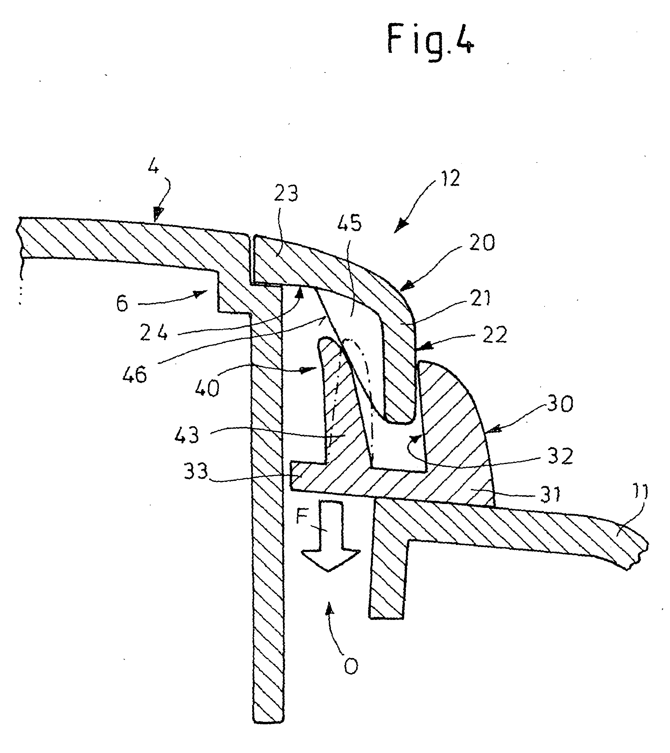

Figur 4 zeigt schematisch einen Ausschnitt der erfindungsgemäßen Abdeckung A aus Fig. 1 im Bereich der Öffnung O mit einer weiteren Ausführungsform des Krafterzeugungselements 40 des Ausgleichselements 12. Die Abdeckung entspricht wieder im wesentlichen der vorhergehend beschriebenen Ausführungsformen, so dass nachfolgend auch in diesem Fall lediglich auf Unterschiede eingegangen wird.

Das Krafterzeugungselement 40 ist in der in Fig. 4 dargestellten Variante zweiteilig ausgebildet. Ein Bauteil besteht aus einem elastischen Steg 43, der sich vom horizontalen Bereich 33 des unteren Teils 30 des Ausgleichselements 12 nach oben, also etwa parallel der Kraft F ausgerichtet erstreckt. Er besitzt eine leichte horizontale Winklung in Richtung des Schaltaggregats 9 bzw. der Öffnung O und einen abgerundeten Kopf.

Das zweite Bauteil des Krafterzeugungselements 40 besteht aus einer Rippe 45, die an der Unterseite 24 des oberen Teils 20 des Ausgleichselements 12 ausgebildet ist. Sie besitzt eine Fläche 46, die zum Zusammenwirken mit dem elastisch deformierbaren Steg 43 im Querschnitt besehen von oben nach unten schräg in Richtung von dem etwa horizontalen Bereich 23 des oberen Teils 20 zu der Spitze seines nach unten gerichteten Stegs 21, also etwa rampenförmig, verläuft. Die Rippe 45 weist solche Ausmaße auf, dass sie im zusammengesetzten Zustand der Abdekkung auf den elastischen Steg 43 drückt und diesen somit aus der Vertikalen nach innen in Richtung der Öffnung O horizontal ablenkt. Mit anderen Worten, der elastische Steg 43 drückt auf die feststehende Rippe 45 des oberen Teils 20 und erzeugt durch deren schräge Fläche 46 bzw. Rampenform eine nach unten resultierende Kraft F, die den lockeren unteren Teil 30 auf die Verkleidung 11 andrückt.

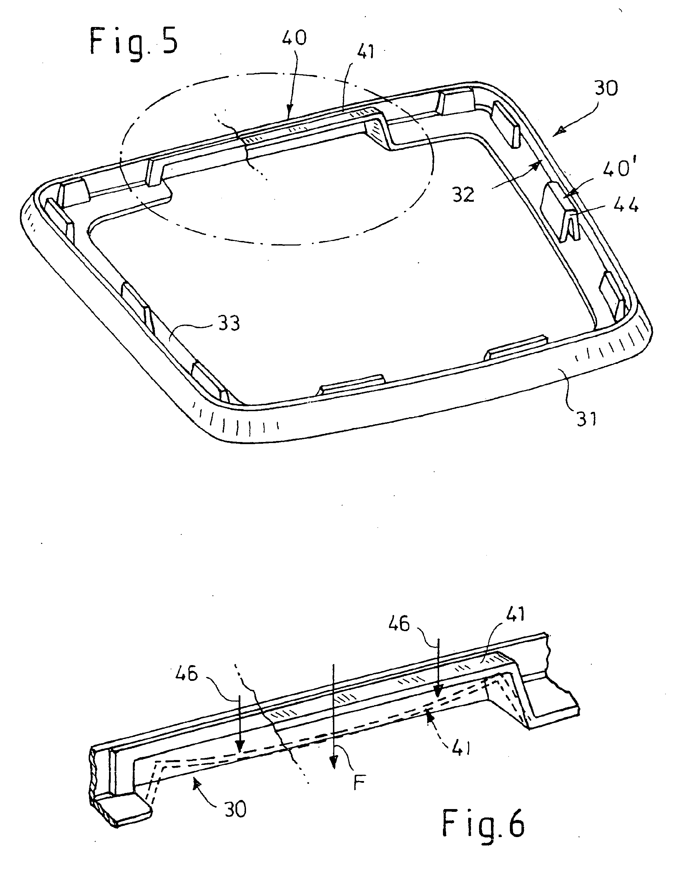

Figur 5 zeigt eine perspektivische Ansicht einer weiteren Ausführungsform des unteren Teils 30 des Ausgleichselements 12 einer erfindungsgemäßen Abdeckung A, wobei zwei Varianten des Krafterzeugungselements, die mit 40 und 40' bezeichnet sind, angedeutet sind.

Bei dem Krafterzeugungselement 40 handelt es sich um eine weitere Ausführungsform eines mit 41 bezeichneten elastischen Bauteils, welches als Feder wirkt. Wie aus der vergrößerten Ansicht der Fig. 6 hervorgeht, wird das Federelement 41 beim Zusammenbau der Abdeckung von durch die Pfeile 46 angedeutete Rippen gestaucht, welches durch die gestrichelte Linie veranschaulicht ist, um die Kraft F zu erzeugen (vgl. oben). Das Federelement 41 kann dazu aus einem geeigneten Kunststoff, wie einem Gummistreifen bestehen. Möglich ist auch, die Wandstärke des unteren Teils 30 an der Position und über die Ausdehnung der Feder zu verringern, um so die benötigte Flexibilität bei ihrer integralen Ausführung mit dem unteren Teil 30 herzustellen.

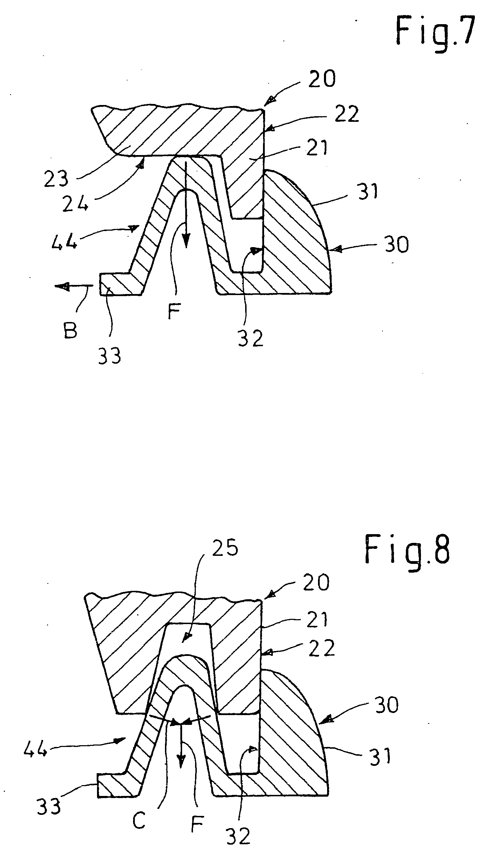

Die andere in Fig. 5 dargestellte Variante des Krafterzeugungselements 40' geht näher aus den Figuren 7 und 8 hervor, die schematisch weitere Varianten des elastischen Bauteils im Form eines Stegs (vgl. Fig. 4) abbilden.

Im Unterschied zu dem bei der Ausführungsform nach Fig. 4 verwendeten Steg handelt es sich bei den Ausführungsformen der Fig. 7 und 8 um einen Doppel-Steg 44, der von zwei, einen spitzen Winkel zwischen sich ausbildenden Stegen geformt wird, die von dem etwa horizontalen Bereich 33 des unteren Teils 30 des Ausgleichselements 12 sich parallel zur Richtung der Kraft etwa nach oben erstrecken. Der Doppel-Steg 44 weist also im Querschnitt gesehen eine etwa A-förmige Gestalt auf, die seine Elastizität bei Druck von oben bewirkt.

Der Doppel-Steg 44 wird von der Unterseite 24 des oberen Teils 20 im zusammengesetzten Zustand von oben durch Druck auf den "Kopf" des A's gestaucht, wobei der etwa horizontalen Bereich 33 in Richtung des Pfeils B "wandert", so dass die nach unten gerichtete Kraft F auf das untere Teil 30 wirkt.

Auch in der Variante nach Fig. 8 wird die nach unten wirkende Kraft F zur Anlage des unteren Teils 30 an der nicht dargestellten Verkleidung durch einen Doppel-Steg 44 erzeugt. Diese wird jedoch im Gegensatz zur vorherigen Ausführungsform nicht durch Druck von oben, sondern durch Einführen des Doppel-Stegs 44 in eine in der Unterseite des oberen Teils 20 vorgesehene Nut 25 in der durch die Pfeile C angedeuteten Richtung gestaucht. Die Nut 25 weist im Querschnitt besehen abgeschrägte Innenseitenflächen auf, so dass der Doppel-Steg 44 durch seine Elastizität das Bestreben hat, aus der Nut 25 herauszurutschen, wodurch die nach unten gerichtete Kraft F erzeugt wird.

In den Ausführungsformen nach Fig. 7 und 8 muss verhindert werden, dass sich durch den Druck auf den Doppel-Steg der etwa horizontale, auf der Verkleidung anliegende Bereich 33 des unteren Teils 30 verformt bzw. verzieht und es so zu sichtbaren, unerwünschten Lücken zwischen Verkleidung und Abdeckung kommt. Hierzu kann z. B. eine unterschiedliche Wandstärke des A-förmigen Doppel-Stegs 44 und des etwa horizontalen Bereichs 33 vorgesehen werden oder der etwa horizontale Bereich 33 einwärts vom Doppel-Steg entfernt werden. Eine weitere Möglichkeit besteht darin, den Kopf des A's, also die Verbindung zwischen den zwei, einen spitzen Winkel zwischen sich ausbildenden Stegen oben, zu durchtrennen, wodurch der flexible bzw. elastische Bereich des Doppel-Stegs nach oben verlegt wird und die Verformung verhindert wird.

## Patentansprüche

1. Abdeckung (A) für die Öffnung (O) einer Verkleidung (11) eines Schaltaggregates (9), mit einem Kulissenbauteil (4) zur Aufnahme eines in diesem zu bewegenden, an dem Schaltaggregat (9) gelagerten Wählhebels (5), insbesondere eines Wählhebels eines Getriebes eines Kraftfahrzeuges, wobei die Abdeckung (A) mit dem Schaltaggregat (9) verbunden ist und ein Ausgleichselement (12) zum Anpassen der Abdeckung (A) an Abweichungen bezüglich der relativen Lage zwischen Schaltaggregat (9) und Verkleidung (11) aufweist,
**dadurch gekennzeichnet, daß**
das Ausgleichselement (12) ein oberes Teil (20) und ein unteres Teil (30) umfaßt, die einander überlappen und gegeneinander verlagerbar sind, wobei das obere Teil (20) ortsfest mit dem Kulissenbauteil (4) verbunden ist und das untere Teil (30) unter einer Kraft (F) eines zwischen den beiden Teilen (20, 30) angeordneten elastischen Bauteils (41, 42, 43, 44) an der Verkleidung (11) anliegt.

2. Abdeckung nach Anspruch 1,
**dadurch gekennzeichnet, daß**
zumindest der Bereich der Öffnung (O) zwischen Verkleidung (11) und Kulissenbauteil (4) abdeckt wird.

3. Abdeckung nach Anspruch 1 oder 2,
**dadurch gekennzeichnet, daß**
das elastische Bauteil mindestens ein Federelement (41) oder einen komprimierbaren elastischen Schaum (42) oder mindestens einen elastisch deformierbaren Steg (43) oder mindestens einen elastisch deformierbaren Doppel-Steg (44) umfasst.

4. Abdeckung nach Anspruch 3,
**dadurch gekennzeichnet, daß**
das elastische Bauteil mindestens eine Rippe (45) zum Zusammenwirken mit dem mindestens einen elastischen deformierbaren Steg (43) oder Doppel-Steg (44) aufweist.

5. Abdeckung nach Anspruch 3 oder 4,
**dadurch gekennzeichnet, daß**
der mindestens eine elastisch deformierbare Doppel-Steg (44) einen A-förmigen Querschnitt aufweist.

6. Abdeckung nach einem der vorhergehenden Ansprüche,
**dadurch gekennzeichnet, daß**
das Ausgleichselement (12), insbesondere dessen oberes Teil (20), ein von dem Kulissenbauteil (4) separates Bauteil ist.

7. Abdeckung nach einem der vorhergehenden Ansprüche,
**dadurch gekennzeichnet, daß**
das Ausgleichselement (12), insbesondere dessen oberes Teil (20), ein mit dem Kulissenbauteil (4) einstückiges Bauteil ist.

8. Abdeckung nach einem der vorhergehenden Ansprüche,
**dadurch gekennzeichnet, daß**
das obere Teil (20) rosettenförmig ausgebildet ist.

9. Abdeckung nach einem der vorhergehenden Ansprüche,
**dadurch gekennzeichnet, daß**
das obere Teil (20) einen der Richtung der Kraft etwa parallel ausgerichteten, umlaufenden Steg (21) aufweist.

10. Abdeckung nach einem der vorhergehenden Ansprüche,
**dadurch gekennzeichnet, daß**
das untere Teil (30) kragenförmig ausgebildet ist.

11. Abdeckung nach einem der vorhergehenden Ansprüche,
**dadurch gekennzeichnet, daß**
das untere Teil (30) einen der Richtung der Kraft etwa parallel ausgerichteten, umlaufenden Steg (31) aufweist.

12. Abdeckung nach Anspruch 11,
**dadurch gekennzeichnet, daß**
der Steg (21) des oberen Teils (20) und der Steg (31) des unteren Teils (30) derart ausgebildet sind, dass sie einander zur Abdeckung der Öffnung (O) zwischen Verkleidung (11) und Kulissenbauteil (4) überlappen und mit Ihren jeweiligen umlaufenden Außen- (22) und Innenflächen (32) aneinander anliegen.

13. Abdeckung nach einem der Ansprüche 1 bis 3,
**dadurch gekennzeichnet, daß**
das obere Teil (20) und das untere Teil (30) über das elastische Bauteil (41) untrennbar, aber elastisch gekoppelt miteinander verbunden sind.

14. Abdeckung nach Anspruch 13,
**dadurch gekennzeichnet, daß**
das elastisches Bauteil als Biegefederelement ausgeführt ist.

15. Abdeckung nach Anspruch 13 oder 14,
**dadurch gekennzeichnet, daß**
oberes Teil, unteres Teil und elastisches Bauteil einstückig ausgeführt sind.

16. Abdeckung nach Anspruch 13 oder 14,
**dadurch gekennzeichnet, daß**
zumindest zwei der Teile oberes Teil, unteres Teil und elastisches Bauteil miteinander gefügt sind.

17. Abdeckung nach Anspruch 13, 14 oder 16,
**dadurch gekennzeichnet, daß**
zumindest zwei der Teile oberes Teil, unteres Teil und elastisches Bauteil einstückig ausgeführt sind.

## Claims

1. Cover (A) for the opening (O) in a trim panel (11) of a shift unit (9), having a gate component (4) for holding a selector lever (5), in particular a selector lever of a transmission of a motor vehicle, which is to move in said gate component (4) and is mounted on the shift unit (9), wherein the cover (A) is connected to the shift unit (9) and has a compensating element (12) for adapting the cover (A) to deviations with regard to the relative positions of the shift unit (9) and the trim panel (11),
**characterized in that**
the compensating element (12) comprises an upper part (20) and a lower part (30) which overlap one another and can be displaced relative to one another, wherein the upper part (20) is connected to the gate component (4) in a positionally fixed manner and the lower part (30) bears against the trim panel (11) under a force (F) of an elastic component (41, 42, 43, 44) which is arranged between the two parts (20, 30).

2. Cover according to Claim 1,
**characterized in that**
at least the region of the opening (O) between the trim panel (11) and the gate component (4) is covered.

3. Cover according to Claim 1 or 2,
**characterized in that**
the elastic component comprises at least one spring element (41) or compressible elastic foam (42) or at least one elastically deformable web (43) or at least one elastically deformable dual web (44).

4. Cover according to Claim 3,
**characterized in that**
the elastic component has at least one rib (45) for interacting with the at least one elastic deformable web (43) or dual web (44).

5. Cover according to Claim 3 or 4,
**characterized in that**
the at least one elastically deformable dual web (44) has an A-shaped cross section.

6. Cover according to one of the preceding claims,
**characterized in that**
the compensating element (12), in particular its upper part (20), is a separate component from the gate component (4).

7. Cover according to one of the preceding claims,
**characterized in that**
the compensating element (12), in particular its upper part (20), is a component which is formed in one piece with the gate component (4).

8. Cover according to one of the preceding claims,
**characterized in that**
the upper part (20) is in the form of a rosette.

9. Cover according to one of the preceding claims,
**characterized in that**
the upper part (20) has a peripheral web (21) which is aligned approximately parallel to the direction of the force.

10. Cover according to one of the preceding claims,
**characterized in that**
the lower part (30) is in the form of a collar.

11. Cover according to one of the preceding claims,
**characterized in that**
the lower part (30) has a peripheral web (31) which is aligned approximately parallel to the direction of the force.

12. Cover according to Claim 11,
**characterized in that**
the web (21) of the upper part (20) and the web (31) of the lower part (30) are formed in such a way that they overlap one another so as to cover the opening (0) between the trim panel (11) and the gate component (4), and bear against one another by means of their respective peripheral outer (22) and inner faces (32).

13. Cover according to one of Claims 1 to 3,
**characterized in that**
the upper part (20) and the lower part (30) are connected to one another by means of the elastic component (41) in an inseparable but elastically coupled fashion.

14. Cover according to Claim 13,
**characterized in that**
the elastic component is formed as a spiral spring element.

15. Cover according to Claim 13 or 14,
**characterized in that**
the upper part, the lower part and the elastic component are formed in one piece.

16. Cover according to Claim 13 or 14
**characterized in that**,
of the upper part, the lower part and the elastic component, at least two are joined to one another.

17. Cover according to Claim 13, 14 or 16,
**characterized in that**,
of the upper part, the lower part and the elastic component, at least two are formed in one piece.

## Revendications

1. Couvercle (A) de l'ouverture (0) d'un logement (11) d'un bloc de commutation (9), comportant un composant à coulisse (4) pour recevoir un levier sélecteur (5) mobile à l'intérieur dudit composant, positionné sur le bloc de commutation (9), notamment un levier sélecteur d'une boîte de vitesses d'un véhicule automobile, moyennant quoi le couvercle (A) est relié au bloc de commutation (9) et présente un élément de compensation (12) pour adapter le couvercle (A) aux écarts par rapport à la position relative entre le bloc de commutation (9) et le logement (11),
**caractérisé en ce que**
l'élément de compensation (12) comprend une partie supérieure (20) et une partie inférieure (30), qui se superposent l'une l'autre et sont déplaçables l'une contre l'autre, moyennant quoi la partie supérieure (20) est reliée de manière fixe au composant à coulisse (4) et la partie inférieure (30) repose sur le logement (11) sous l'effet d'une force (F) d'un composant élastique (41,42,43,44) disposé entre les deux parties (20,30).

2. Couvercle selon la revendication 1,
**caractérisé en ce que**
au moins la portion de l'ouverture (0) entre le logement (11) et le composant à coulisse (4) est couverte.

3. Couvercle selon la revendication 1 ou 2,
**caractérisé en ce que**
le composant élastique comprend au moins un élément de ressort (41) ou une mousse élastique compressible (42) ou au moins une ailette élastique déformable (43) ou au moins une double ailette élastique déformable (44).

4. Couvercle selon la revendication 3,
**caractérisé en ce que**
le composant élastique présente au moins une nervure (45) pour coopérer avec au moins une ailette (43) ou une double ailette (44) élastique déformable.

5. Couvercle selon la revendication 3 ou 4,
**caractérisé en ce qu'**au moins une double ailette élastique déformable (44) présente une section transversale en forme de A.

6. Couvercle selon l'une des revendications précédentes,
**caractérisé en ce que**
l'élément de compensation (12), notamment la partie supérieure (20) de celui-ci, est un composant séparé du composant à coulisse (4).

7. Couvercle selon l'une des revendications précédentes,
**caractérisé en ce que**
l'élément de compensation (12), notamment la partie supérieure (20) de celui-ci, est un composant formant un seul bloc avec le composant à coulisse (4).

8. Couvercle selon l'une des revendications précédentes,
**caractérisé en ce que**
la partie supérieure (20) est configurée en forme de rosace.

9. Couvercle selon l'une des revendications précédentes,
**caractérisé en ce que**
la partie supérieure (20) présente une ailette (21) périphérique, orientée approximativement parallèlement au sens de la force.

10. Couvercle selon l'une des revendications précédentes,
**caractérisé en ce que**
la partie inférieure (30) est configurée en forme de collerette.

11. Couvercle selon l'une des revendications précédentes,
**caractérisé en ce que**
la partie inférieure (30) présente une ailette (31) périphérique, orientée approximativement parallèlement au sens de la force.

12. Couvercle selon la revendication 11,
**caractérisé en ce que**
l'ailette (21) de la partie supérieure (20) et l'ailette (31) de la partie inférieure (30) sont conçues de telle sorte qu'elles se superposent l'une l'autre afin de couvrir l'ouverture (O) entre le logement (11) et le composant à coulisse (4) et reposent l'une sur l'autre par leurs surfaces externe (22) et interne (32) respectives périphériques.

13. Couvercle selon l'une des revendications 1 à 3,
**caractérisé en ce que**
la partie supérieure (20) et la partie inférieure (30) sont reliées l'une à l'autre de manière inséparable, mais couplée élastiquement par le composant élastique (41).

14. Couvercle selon la revendication 13,
**caractérisé en ce que**
le composant élastique est réalisé comme un élément de ressort à flexion.

15. Couvercle selon la revendication 13 ou 14,
**caractérisé en ce que**
la partie supérieure, la partie inférieure et le composant élastique sont configurés en un seul bloc.

16. Couvercle selon la revendication 13 ou 14,
**caractérisé en ce que**
au moins deux de la partie supérieure, la partie inférieure et le composant élastique sont assemblés l'un à l'autre.

17. Couvercle selon la revendication 13, 14 ou 16,
**caractérisé en ce que**
au moins deux de la partie supérieure, la partie inférieure et le composant élastique sont configurés en un seul bloc.
